Europäisches Patentamt

European Patent Office

Office européen des brevets

(19)

(11) Veröffentlichungsnummer: **0 002 854**
**B1**

(12)

# EUROPÄISCHE PATENTSCHRIFT

(45) Veröffentlichungstag der Patentschrift:
**24.06.81**

(21) Anmeldenummer: **78200356.0**

(22) Anmeldetag: **07.12.78**

(51) Int. Cl.³: **C 08 G 16/02,** C 09 D 11/08,
C 09 F 1/04

(54) **Verfahren zur Herstellung von teilveresterten und teilversalzten Umsetzungsprodukten von Naturharzsäuren und Formaldehyd und deren Verwendung.**

(30) Priorität: **15.12.77 DE 2755825**

(43) Veröffentlichungstag der Anmeldung:
**11.07.79 Patentblatt 79/14**

(45) Bekanntmachung des Hinweises auf die Patenterteilung:
**24.06.81 Patentblatt 81/25**

(84) Benannte Vertragsstaaten:
**BE DE FR GB IT NL**

(56) Entgegenhaltungen:
**DE-B-1 106 908**
**US-A-2 572 071**

(73) Patentinhaber: **HOECHST AKTIENGESELLSCHAFT,
Zentrale Patentabteilung Postfach 80 03 20,
D-6230 Frankfurt/Main 80 (DE)**

(72) Erfinder: **Rudolphy, Albert, Wilhelm-Kalle-Strasse 20,
D-6200 Wiesbaden-Biebr. (DE)**
Erfinder: **Dathe, Wolfgang, Tannenring 57,
D-6201 Wiesbaden-Auringen (DE)**

Verfahren zur Herstellung von teilveresterten und teilversalzten Umsetzungsprodukten von Naturharzsäuren und Formaldehyd und deren Verwendung

Die Entwicklung besonders schnellaufender Druckmaschinen und der Trend, neben Papieren, die normal oder nur leicht gestrichen sind, in erhöhtem Masse auch nicht gestrichene Papiere zu bedrucken, stellt besonders hohe Anforderungen an die Qualität der Tiefdruckfarben. Diese sollen nicht nur so stabil sein, dass sie auch mit Rot-, Blau- und Gelbpigmenten gelagert werden können und ihren Farbton möglichst wenig verändern, sondern neben guter Pigmentbenetzung rasch trocknen und den Drucken guten Stand und hohen Glanz verleihen.

Die Modifizierung von Kolophonium mit Formaldehyd mit dem Ziel, in einfacher Weise die sauren und niedrigschmelzenden Naturharzsäuren in höherschmelzende und neutralere Produkte zu überführen, ist bekannt. Es ist auch bekannt, dass solche Reaktionsprodukte bei der Herstellung von Resinaten, insbesondere Zinkresinaten, nicht mehr so stark zum «Blocken», das heisst zu Kristallisationserscheinungen neigen, wie direkt mit Metallverbindungen umgesetzte Schmelzen von Naturharzsäuren. Ferner ist es aus US-PS 2 572 071 bekannt, Schmelzen von Balsamkolophonium zuerst mit Paraformaldehyd und dann entweder mit Calciumacetat oder Ca(OH)$_2$ bei 275 bis 290 °C umzusetzen. Hierbei werden jedoch lediglich Harze mit einer Säurezahl von 5 erhalten, die sich nicht mehr in Toluol lösen, sondern gerade noch quellbar sind. Diese Harze sind daher nicht für den Tiefdruck geeignet. Ein weiterer Nachteil dieses Verfahrens liegt darin, dass trotz der Modifizierung des Kolophoniums mit Paraformaldehyd nicht vermieden wird, dass nach der Zugabe von ZnO nach kurzer Reaktion «Blocken» auftritt, so dass die Einarbeitung von Ca(OH)$_2$ nicht mehr möglich ist, wie Beispiele dieser Druckschrift zeigen. Nach einigen anderen Beispielen lassen sich zwar Resinate ohne «Blocken» erhalten; diese weisen aber Schmelzpunkte von nur 74 bis 93 °C auf und sind völlig trüb.

Gegenstand der Erfindung ist ein Verfahren zur Herstellung von teilveresterten und mit zweiwertigen Metallverbindungen teilversalzten Umsetzungsprodukten von Naturharzsäuren und Formaldehyd durch Umsetzung der Naturharzsäuren mit Formaldehyd und weitere Umsetzung mit zweiwertigen Metallverbindungen unter Salzbildung, das dadurch gekennzeichnet ist, dass a) in erster Stufe die Naturharzsäuren unter erhöhtem Druck und bei einer Temperatur von 100 bis 200 °C mit 7,5 bis 12, vorzugsweise 8 bis 10 Gew.-% eines polymeren Formaldehyds, bezogen auf die Naturharzsäure, umgesetzt werden, dass b) in zweiter Stufe die Temperatur weiter auf mindestens 200 °C, aber um mindestens 20 °C erhöht und unter atmosphärischem Druck bis zu einer Säurezahl von 115 bis 135 unter Teilveresterung umgesetzt wird, c) das erhaltene Reaktionsprodukt bei einer Temperatur von mindestens 200 °C, vorzugsweise bei keiner niedrigeren Temperatur als unter b), mit einer solchen Menge einer alkalischen Calciumverbindung teilweise in das Calciumsalz übergeführt wird, dass 3,5 bis 4 Gewichtsteile Calcium auf 100 Gewichtsteile Reaktionsprodukt kommen, d) die nicht umgesetzte Base durch Zusatz von 10 bis 50 Gew.-%, bezogen auf die zugesetzte Calciumverbindung, mit einer gesättigten Monocarbonsäure mit 1 bis 6 C-Atomen, vorzugsweise Essigsäure, bei einer Temperatur von mindestens 200 °C und unter gleichzeitiger Vervollständigung der Salzbildung des Reaktionsproduktes neutralisiert wird, bis eine Säurezahl von 20 bis 40 erreicht wird.

Die erfindungsgemäss hergestellten Produkte zeichnen sich durch besonders günstige Eigenschaften als Druckfarbenbindemittel, insbesondere für den Toluoltiefdruck, aus. Sie sind in Toluol löslich, «blocken» nicht bei der Herstellung und enthalten keinen störenden Anteil an nicht umgesetzten Metallverbindungen. Sie haben im allgemeinen einen Schmelzpunkt von mindestens 130 °C (Kapillarmethode) und eine Viskosität von 50 bis 600, vorzugsweise 70 bis 400 mPa.s (50% Toluol/20 °C).

Geeignete Naturharzsäuren sind beispielsweise Kolophonium, insbesondere Balsamkolophonium, Wurzelharze, Tallharz, jeweils einzeln oder im Gemisch.

Die Teilveresterung in Stufen a) und b) wird durch Veresterung zwischen den COOH-Gruppen der Naturharzsäure und den bei der Umsetzung mit dem polymeren Formaldehyd entstehenden Methylolgruppen bewirkt.

Der Anteil des polymeren Formaldehyds, der z.B. in Form von Trioxan, vorzugsweise Paraformaldehyd, eingesetzt werden kann, in Stufe a) im angegebenen Bereich ist wesentlich, um ein Produkt mit den gewünschten Eigenschaften, insbesondere mit ausreichend hohem Schmelzpunkt, zu erhalten.

Zweckmässig wird in erster Stufe unter einem Druck von 2 bis 10 bar, vorzugsweise 3 bis 6 bar, gearbeitet. In manchen Fällen kann jedoch bei einem Überdruck ausserhalb dieses Bereiches gearbeitet werden.

Mit Vorteil wird die Reaktion in Stufe a) bei 125 bis 200 °C, vorzugsweise bis 180 °C, in Stufen b) und c) bei 200 bis 280 °C, vorzugsweise bei 200 bis 260 °C und in Stufe d) bei 200 bis 260 °C durchgeführt.

In Stufe c) wird in der Regel mit Calciumoxyd und/oder Calciumhydroxyd, vorzugsweise in Form einer Aufschlämmung in geeigneten Lösungsmitteln gearbeitet. Das Aufschlämmen bewirkt eine gleichmässige Verteilung und vollständige Umsetzung. Geeignete Lösungsmittel hierfür sind z.B. hochsiedende Medien, wie Xylol, Lackbenzin, Terpentinöl, Mineralöl mit einem Siedebereich von bis zu 280 °C, Harzöl mit einer Säurezahl von weniger als 20, wie es bei der Herstellung von mit Phenolharz modifizierten Naturharzsäuren anfällt, sowie Terpenphenoldestillate mit einer Säurezahl von unter 1, wie sie bei der Herstellung von Terpenphenolharzen anfallen.

Auch die Umsetzung der Carbonsäure in Stufe d) kann in Gegenwart eines Lösungsmittels, vorzugsweise desselben, das zur Aufschlämmung der Calciumverbindungen benutzt wird, vorgenommen werden. Die Umsetzung mit der Carbonsäure, insbesondere Essigsäure, bewirkt nicht nur die Überführung nicht umgesetzter Calciummengen in das entsprechende Salz, sondern dient auch gleichzeitig zur Steuerung der Viskosität des Produktes. Etwa nicht umgesetzte Carbonsäure braucht nicht unbedingt entfernt zu werden, da sie sich nicht nachteilig auf die Eigenschaften der Produkte auswirkt.

Es ist ferner möglich, Produkte, die mit höheren als den erwünschten Viskositäten erhalten werden, nachträglich mit bis zu 5 Gew.-% an Naturharzsäuren zu versetzen bzw. zu modifizieren, um dadurch Produkte mit der erwünschten Viskosität zu erzielen. Dies kann ohne oder mit einer chemischen Reaktion verbunden sein. Im letzten Fall wird das Naturharz vorteilhaft nach der Stufe b) und/oder nach der Stufe d) zugesetzt, eventuell aber auch nach der Stufe c). Bei den danach angewandten Temperaturen bzw. bei der Temperatur, auf der sich das Harz nach der Stufe d) befindet, z.B. bei 200 bis 250 °C, erfolgt die Modifizierung durch Reaktion.

Die erfindungsgemässen Produkte weisen einen ganz erheblichen höheren Schmelzpunkt als die als Ausgangsstoff dienenden Naturharzsäuren auf. Sie sind sehr gut in aromatischen Kohlenwasserstoffen, insbesondere in Toluol, löslich. Da sie ausserdem Pigmente sehr gut benetzen, eignen sie sich ausgezeichnet als Bindemittel für Toluoltiefdruckfarben. Dabei zeigen sie eine rasche Trocknung, hohen Glanz, hohe Farbstärke und guten Stand auf gestrichenem und nicht gestrichenem Papier. Besonders vorteilhaft ist das Verhalten bei der Lagerung von mit Gelbpigmenten hergestellten Toluoltiefdruckfarben, weil diese nicht nur weitgehend viskositätsstabil bleiben, sondern auch wesentlich geringere Vergrünungstendenzen zeigen als handelsübliche Resinate.

In den folgenden Beispielen sind – wenn nicht anders angegeben – T jeweils Gewichtsteile und % jeweils Gewichtsprozent. Die Viskositätsangaben beziehen sich stets auf 50%ige Toluollösungen/20°C. Die Schmelzpunkte (Fp) wurden jeweils nach der Kapillarmethode bestimmt.

Beispiele

In Stufe a) werden die Naturharzsäuren oder deren Mischungen geschmolzen; dem 10 bis 120 °C warmen Ansatz wird Paraformaldehyd zugegeben und das Gemisch unter Rühren in einem Druckreaktor auf die gewünschte Temperatur gebracht. Nach beendeter Reaktion wird in Stufe b) unter atmosphärischem Druck weitergearbeitet und die Mischung zur Teilveresterung unter Austritt von formaldehydhaltigem Wasser auf über 200 °C erhitzt.

Nachstehende Tabelle 1 gibt eine Übersicht über die Stufen a) und b). Die angeführten Säurezahlen (SZ) wurden mittels methanolischer KOH bestimmt.

Tabelle 1

| Beispiel | | 1 | 2 | 3 | 4 | 5 |
|---|---|---|---|---|---|---|
| Ausgangsstoffe | | | | | | |
| Portug. Kolophonium Fp. 65 °C, SZ 165 | [T] | 3000 | 3000 | 2400 | – | – |
| Amerik. Wurzelharz Fp. 62 °C, SZ 162 | [T] | – | – | – | 3000 | – |
| Amerik. Tallharz Fp. 58 °C, SZ 160 | [T] | – | – | 600 | – | 3000 |
| Paraformaldehyd | [T] | 225 | 300 | 300 | 255 | 360 |
| Stufe a) – Reaktion unter erhöhten Druck | | | | | | |
| Temperatur 160 °C | | + | + | + | + | + |
| Maximaldruck | [bar] | 3,5 | 4,8 | 3,8 | 4,2 | 5,6 |
| Minimaldruck | [bar] | 1,8 | 2,5 | 2,2 | 2,0 | 2,8 |
| Reaktionszeit | [4 h] | + | + | + | + | + |
| Stufe b) – Teilveresterung bei atmosphärischem Druck | | | | | | |
| Reaktion 1 h/250 °C | | + | + | + | + | + |
| Ausbeute | [T] | 3070 | 3100 | 3060 | 3080 | 3125 |
| Schmelzpunkt (Fp) | [°C] | 80 | 82 | 81 | 78 | 85 |
| Säurezahl (SZ) | | 127 | 122 | 123 | 126 | 115 |

Wie aus Tabelle 1 ersichtlich, hat sich bereits der Schmelzpunkt gegenüber dem der Ausgangsharzsäuren unter gleichzeitiger Senkung der Säurezahl erhöht.

Die Weiterverarbeitung in den Stufen c) bis d) erläutern die folgenden Beispiele:

Jeweils 600 T einer Probe gemäss den Beispielen 1 bis 5 wird in Stufe c) mit CaO oder Ca(OH)$_2$, gegebenenfalls in Aufschlämmung in einem Lösungsmittel, und in Stufe d) mit Essigsäure (99%ig) gegebenenfalls zusammen mit demselben organischen Lösungsmitteln wie in Stufe c), umgesetzt. Tabelle 2 gibt eine Übersicht über die Beispiele 1a) bis 5d) und die dabei erhaltenen Produkte

1a) – 15 Minuten nach Zugabe des CaO (nicht aufgeschlämmt) wird die Essigsäure zugetropft und das Gemisch auf 220 bis 260°C erhitzt, bis die Säurezahl auf etwa 35 gefallen ist. Nach Entfernen der flüchtigen Anteile unter vermindertem Druck erhält man das Reaktionsprodukt. 0,9 T CaO wurden nicht umgesetzt.

1b) – Es wird wie nach Beispiel 1a) gearbeitet, jedoch mit einer Aufschlämmung von CaO und mit Essigsäure zusammen mit Xylol. Trotz der etwas höheren CaO-Menge wird diese wegen der gleichmässigen Verteilung in dem Lösungsmittel vollständig umgesetzt.

Die Produkte der Beispiele 1a) und 1b) ergeben schnelltrocknende Druckfarben mit hohem Glanz, guter Fabstärke und gutem Stand auf gestrichenem und Naturharzpapier.

2a) – Die Probe vom Beispiel 2 wird geschmolzen. Eine Stunde nach Zugabe der Ca(OH)$_2$-Aufschlämmung wird bei 250°C die Essigsäure zugegeben. Es wird gearbeitet wie nach Beispiel 1a).

3a) bis 5d) – Als Lösungsmittel für die Ca(OH)$_2$-Aufschlämmung wird nach Beispiel 3a) Mineralöl vom Siedebereich 240 bis 270°C und nach Beispielen 3b), 4b) und 5b) bis 5d) ein bei der Herstellung von Terpenphenolharzen anfallendes Destillat (Säurezahl = 0), nach Beispiel 4a) und 5a) eine bei der Herstellung von mit Phenolharz modifizierten Naturharzsäuren anfallendes Harzöl (Säurezahl = 12) verwendet. Nach Beispielen 5c) und 5d) werden nach der Stufe d) zusätzlich Naturharzsäuren zugegeben.

5V) – (Vergleichsbeispiel zu 5b). Bei diesem Vergleichsbeispiel wird auf den Zusatz einer Carbonsäure verzichtet. Daher ist die Viskosität des Endprodukts erheblich höher als die des Endprodukts vom Beispiel 5b).

Tabelle 2

| Beispiel | 1 | | 2 | | 3 | | 4 | |
|---|---|---|---|---|---|---|---|---|
| | a | b | a | b | a | b | a | b |
| **Stufe c)** | | | | | | | | |
| Temperatur °C | 220–260 | 220–260 | | | 230–260 | 230–260 | 230–260 | 230–260 |
| CaO T | 32 | 33 | – | – | 16 | – | – | – |
| Ca(OH)$_2$ T | – | – | 39 | 41 | 20 | 41 | 39 | 41 |
| organ. | – | 33 | 30 | 60 | 35 | 30 | 30 | 30 |
| Lösungsmittel T | | (Xylol) | (Terpentinöl) | (Lackbenzin) | (Mineralöl) | (Terpenphenolharz-Destillat) | (Harzöl) | (Terpenphenolharz-Destillat) |
| **Stufe d) (+ e))** | | | | | | | | |
| Essigsäure T | 10 | 15 | 10 | 15 | 15 | 17 | 10 | 15 |
| organ. Lösungsmittel T | – | 15 | 10 | 20 | 15 | 12 | 10 | 15 |
| Naturharz T | – | – | – | – | – | – | – | – |
| Endprodukt T | 603 | 600 | 597 | 595 | 605 | 600 | 603 | 595 |
| Schmelzpunkt °C | 140 | 143 | 137 | 147 | 140 | 147 | 139 | 144 |
| Säurezahl | 35 | 33 | 27 | 25 | 30 | 26 | 24 | 24 |
| Viskosität (50% Toluol/ 20°C) mPa.s | 70 | 110 | 125 | 300 | 150 | 305 | 120 | 273 |

| 5 | | V | | | Vergleichsprobe | |
|---|---|---|---|---|---|---|
| a | b | Vergleich c zu 5b | d | | A | B |
| 230–260 | 230–260 | 230–260 | 230–260 | 230–260 | | |
| – | – | – | – | – | | |
| 39 | 41 | 41 | 41 | – | | |
| 30 | 30 | 30 | 30 | – | | |
| (Harzöl) | (wie 4b) | (wie 4b) | (wie 4b) | – | | |
| 10 | 15 | – | 15 | 15 | | |
| 10 | 15 | – | 15 | 15 | | |
| – | – | – | 20 | 30 | | |
| 600 | 592 | 594 | 616 | 624 | – | – |
| 150 | 154 | 148 | 147 | 146 | 134 | 141 |
| 22 | 20 | 23 | 23 | 21 | 43 | 49 |
| 220 | 558 | 954 | 340 | 200 | 90 | 270 |

Bisheriges Vergleichsharz A ist ein Handelsprodukt in Form eines Calcium-Zink-Resinats von teilpolymerisiertem Kolophonium, Calciumgehalt 3,43%, Zinkgehalt 0,86%, Schmelzpunkt 134°C, Säurezahl 43, Viskosität (50% Toluol/20°C) 90 mPa.s.

Harz B ist ebenfalls ein Handelsprodukt und stellt ein Calcium-Resinat aus dimerisiertem Kolophonium dar, Calciumgehalt 3,58%, Schmelzpunkt 141°C, Säurezahl 49, Viskosität (50% Toluol/20°C), 170 mPa.s.

Drucktechnische Prüfung

a) Herstellung der Druckfarben

Die erfindungsgemässen Produkte wurden in Toluol gelöst und jeweils mit geeigneten Pigmenten vermischt. Für Rotfarben wurden 20% Rotpigment, für Blaufarben 16% Blaupigment und für Gelbfarben 12% Gelbpigment zugegeben. Jeweils 100 T 50%ige Toluollösungen wurden mit soviel Toluol versetzt, dass eine Auslaufzeit von 17 Sekunden im DIN 4 mm-Becher erhalten wurde.

Diskussion der Ergebnisse von Tabelle 3

a) und b) Rotfarben

Aus nachstehender Tabelle 3 ist ersichtlich, das alle Farben vom Typ a) und b) – mit Ausnahme der Probe 4a) – zumindest gleich rasch wie die Farbe aus dem jeweiligen Vergleichsharz, im Durchschnitt aber rascher trocknen. Der Glanz ist bei allen Proben günstiger als der der Vergleichsproben. Auch der Stand auf dem Papier ist demjenigen der Vergleichsprobe zumindest gleichwertig, in den meisten Fällen jedoch überlegen. Die Lagerstabilität der Rotfarben entspricht derjenigen der Vergleichsprobe.

c) Blaufarben

Bis auf die Probe 5c), die die gleiche Trocknung wie die Vergleichsprobe aufweist, zeigen alle anderen Proben eine raschere Trocknung bei eindeutig verbessertem Glanz. Der Stand auf dem Papier ist in allen Fällen besser als bei der Vergleichsprobe. Die Lagerstabilität ist durchweg günstiger.

## Tabelle 3

Spaltengruppen:
- a) Rotfarben aus Bindemitteln der Viskosität 70–150 mPa.s (Vergleichsharz A): 1a, 1b, 2a, 3a, 4a, Vgl.harz A
- b) Rotfarben aus Bindemitteln der Viskosität 150–400 mPa.s (Vergleichsharz B): 2b, 3b, 4b, 5a, 5c, 5d, Vgl.harz B
- c) Blaufarben (Vergleichsharz A und Vergleichsharz B): 2b, 3a, 3b, 4b, 5c, Vgl.harz A, Vgl.harz B

| Beispiel | 1a | 1b | 2a | 3a | 4a | Vgl.harz A | 2b | 3b | 4b | 5a | 5c | 5d | Vgl.harz B | 2b | 3a | 3b | 4b | 5c | Vgl.harz A | Vgl.harz B |
|---|---|---|---|---|---|---|---|---|---|---|---|---|---|---|---|---|---|---|---|---|
| DIN-4mm-Auslaufzeit der Farben/25°C/s | 17 | 16,9 | 17,1 | 17 | 16,9 | 17,1 | 16,9 | 17,2 | 17 | 17,3 | 17,1 | 17 | 16,9 | 17,1 | 16,9 | 17 | 17 | 17,1 | 17 | 17,1 |
| Trocknung einer 36 μ Nasschicht auf gestrichenem Papier/s | 40 | 38 | 36 | 37 | 45 | 40 | 35 | 36 | 37 | 40 | 41 | 42 | 43 | 40 | 42 | 40 | 42 | 45 | 43 | 45 |
| Glanz der Aufzüge | 85 | 79 | 81 | 86 | 90 | 73 | 75 | 72 | 70 | 74 | 80 | 82 | 60 | 74 | 70 | 64 | 65 | 70 | 63 | 55 |
| Stand der 6 μ Nasschichtdicke auf gestrichenem Papier/60 g/m$^2$: wie Vergl. Farbe A bzw. B | + | – | – | – | – | + | – | – | – | – | + | + | + | – | – | – | – | – | + | + |
| besser als Farbe A bzw. B | – | + | + | + | + |  | + | + | + | + | – | – |  | + | + | + | + | + | – | – |
| ungünstiger als Farbe A bzw. B | – | – | – | – | – |  | – | – | – | – | – | – |  | – | – | – | – | – | – | – |
| DIN-4mm-Auslaufzeit nach 14 Tagen/24°C/s | 19,4 | 19 | 19,2 | 18,9 | 19,5 | 19,3 | 18,6 | 18,9 | 18,4 | 18,7 | 18,7 | 18 | 18,8 | 20,3 | 20,5 | 20 | 19 | 19,8 | 21 | 20,6 |

d) Gelbfarben

Auch für die Gelbfarben gilt der verbesserte Stand auf dem Papier.

Für die Prüfung der Lagerstabilität wurde ein Teil der Gelbfarben im Kühlschrank, die Hauptmenge in Schraubdeckelgläsern 7 Tage bei 40°C gelagert. Nach einem Tag Lagerung bei Raumtemperatur wurden die gekühlt aufbewahrten Farben und die bei 40°C gelagerten Farben nebeneinander auf gestrichenem Papier mit 12 μm Nasschichtdicke mittels einer Drahtspirale aufgezogen und hinsichtlich der Vergrünungstendenz beurteilt. Ausserdem wurde die Auslaufzeit im DIN 4 mm-Becher bei 25°C bestimmt.

Die Ergebnisse für die Gelbfarben sind in nachstehender Tabelle 4 zusammengestellt.

Tabelle 4 zeigt, dass die erfindungsgemäss hergestellten Produkte als Bindemittel den gelben Druckfarben nicht nur eine bessere Lagerstabilität, sondern auch eine bessere Farbtonstabilität verleihen.

Tabelle 4

| Beispiel | 1a | 1b | 2a | 2b | 3a | 3b | 4a | 4b | 5a | 5d | 5e | Vergleichsharz A | B |
|---|---|---|---|---|---|---|---|---|---|---|---|---|---|
| | d) Gelbfarben | | | | | | | | | | | | |
| DIN-4mm Auslaufzeit der Farben/25°C/s | 32 | 28 | 30 | 27 | 30 | 26 | 28 | 26 | 30 | 33 | 36 | 44 | 48 |
| Vergrünung der Farben: | | | | | | | | | | | | | |
| gering | + | + | + | + | + | + | + | + | + | + | + | − | − |
| deutlich | − | − | − | − | − | − | − | − | − | − | − | + | + |
| stark | − | − | − | − | − | − | − | − | − | − | − | + | − |

## Patentansprüche

1. Verfahren zur Herstellung von teilveresterten Umsetzungsprodukten von Naturharzsäuren und Formaldehyd durch Umsetzung der Naturharzsäuren mit Formaldehyd und weitere Umsetzung mit Verbindungen zweiwertiger Metalle unter Salzbildung, dadurch gekennzeichnet, dass
a) in erster Stufe die Naturharzsäuren unter erhöhtem Druck und bei einer Temperatur von 100°C bis 200°C mit 7,5 bis 12 Gew.-% eines polymeren Formaldehyds, bezogen auf die Naturharzsäure, umgesetzt werden, dass
b) in zweiter Stufe die Temperatur weiter auf mindestens 200°C, aber um mindestens 20°C erhöht und unter atmosphärischem Druck bis zu einer Säurezahl von 115 bis 135 unter Teilveresterung umgesetzt wird,
c) das erhaltene Reaktionsprodukt bei einer Temperatur von mindestens 200°C mit einer solchen Menge einer alkalischen Calciumverbindung teilweise in das Calciumsalz übergeführt wird, dass 3,5 bis 4 Gewichtsteile Calcium auf 100 Gewichtsteile Reaktionsprodukt kommen,
d) die nicht umgesetzte Base durch Zusatz von 10 bis 50 Gew.-%, bezogen auf die zugesetzte Calciumverbindung, mit einer gesättigten Monocarbonsäure mit 1 bis 6 C-Atomen bei einer Temperatur von mindestens 200°C und unter gleichzeitiger Vervollständigung der Salzbildung des Reaktionsprodukts neutralisiert wird, bis eine Säurezahl von 20 bis 40 erreicht wird, und die erhaltenen Produkte
$e_1$) nach Stufe d) isoliert oder
$e_2$) nach wenigstens einer der Stufen b) bis d) mit bis zu 5 Gew.-% Naturharzsäuren versetzt werden.

2. Verfahren nach Anspruch 1, dadurch gekennzeichnet, dass die Reaktion in Stufe a) bei 125 bis 200°C, vorzugsweise bis 180°C, und in Stufen b) und c) bei 200 bis 280°C, vorzugsweise bei 200 bis 260°C durchgeführt wird.

3. Verfahren nach Anspruch 1 oder 2, dadurch gekennzeichnet, dass die Naturharzsäuren in Stufe a) mit 8 bis 10 Gew.-% des polymeren Formaldehyds umgesetzt werden.

4. Verfahren nach einem oder mehreren der Ansprüche 1 bis 3, dadurch gekennzeichnet, dass in Stufe c) bei keiner niedrigeren Temperatur als in Stufe b) umgesetzt wird.

5. Verfahren nach einem oder mehreren der Ansprüche 1 bis 4, dadurch gekennzeichnet, dass in Stufe c) mit Calciumoxyd und/oder Calciumhydroxyd, vorzugsweise in Form einer Aufschlämmung in organischen Lösungsmitteln gearbeitet wird.

6. Verfahren nach einem oder mehreren der Ansprüche 1 bis 5, dadurch gekennzeichnet, dass die Monocarbonsäure in Stufe d) Essigsäure ist.

7. Verfahren nach einem oder mehreren der Ansprüche 1 bis 6, dadurch gekennzeichnet, dass die Carbonsäure in Stufe d) im Gemisch mit einem Lösungsmittel, vorzugsweise demselben, wie es zur Aufschlämmung der Calciumverbindungen benutzt wird, eingesetzt wird.

8. Verfahren nach einem oder mehreren der Ansprüche 1 bis 7, dadurch gekennzeichnet, dass Produkte mit einem Schmelzpunkt von mindestens 130°C (Kapillarmethode) und einer Viskosität von 50 bis 600, vorzugsweise 70 bis 400 mPa.s (50% Toluol/20°C) hergestellt werden.

9. Verwendung der nach einem oder mehreren der Ansprüche 1 bis 8 erhaltenen Umsetzungsprodukte als Bindemittel für Druckfarben, insbesondere für den Toluoltiefdruck.

## Revendications

1. Procédé de préparation de produits de réaction d'acides résiniques naturels et du formaldéhyde, partiellement estérifiés et partiellement salifiés par des composés de métaux bivalents, par réaction d'acides résiniques naturels avec le formaldéhyde et réaction ultérieure, accompagnée d'une salification, avec des composés de métaux bivalents, procédé caractérisés en ce que:

a) dans une première étape on fait réagir les acides résiniques naturels, sous pression élevée et à une température de 100 à 200°C, avec de 7,5 à 12% en poids d'un formaldéhyde polymère, par rapport à l'acide résinique naturel,

b) dans une seconde étape on élève la température à au moins 200°C, mais d'au moins 20°C, et on fait réagir avec estérification partielle, sous la pression atmosphérique, jusqu'à un indice d'acide de 115 à 135,

c) on transforme partiellement en le sel calcique le produit réactionnel obtenu, à une température d'au moins 200°C, avec une quantité d'un composé alcalin du calcium telle qu'il y ait de 3,5 à 4 parties en poids de calcium pour 100 parties en poids du produit réactionnel,

d) on neutralise la base qui n'a pas réagi par addition de 10 à 50% en poids, par rapport au composé du calcium ajouté, d'un acide monocarboxylique saturé contenant de 1 à 6 atomes de carbone, à une température d'au moins 200°C, tout en achevant la formation du sel du produit réactionnel, jusqu'à ce qu'un indice d'acide de 20 à 40 soit atteint, et

$e_1$) on isole les produits obtenus dans l'étape d) ou

$e_2$) on leur ajoute, après au moins l'une des étapes b) à d), jusqu'à 5% en poids d'acides résiniques naturels.

2. Procédé selon la revendication 1, caractérisé en ce qu'on effectue la réaction dans l'étape a) entre 125 et 200°C, de préférence à 180°C au plus, et, dans les étapes b) et c), entre 200 et 280°C, de préférence entre 200 et 260°C.

3. Procédé selon l'une des revendications 1 et 2, caractérisé en ce qu'on fait réagir les acides résiniques naturels dans l'étape a) avec de 8 à 10% en poids du formaldéhyde polymère.

4. Procédé selon l'une quelconque des revendications 1 à 3, caractérisé en ce qu'on fait réagir dans l'étape c) à une température qui n'est pas inférieure à celle de l'étape b).

5. Procédé selon l'une quelconque des revendictions 1 à 4, caractérisé en ce qu'on opère, dans l'étape c), avec de l'oxyde de calcium et/ou de l'hydroxyde de calcium, de préférence sous la forme d'une suspension dans des solvants organiques.

6. Procédé selon l'une quelconque des revendications 1 à 5, caractérisé en ce que l'acide monocarboxylique, dans l'étape d), est l'acide acétique.

7. Procédé selon l'une quelconque des revendications 1 à 6, caractérisé en ce que l'acide carboxylique, dans l'étape d), est utilisé en mélange avec un solvant, de préférence le même que celui qui a servi pour la mise en suspension des composés du calcium.

8. Procédé selon l'une quelconque des revendications 1 à 7, caractérisé en ce qu'on prépare des produits ayant un point de fusion d'au moins 130°C (méthode au capillaire) et une viscosité de 50 à 600 mPa.s., de préférence de 70 à 400 mPa.s (à 50% dans du toluène, à 20°C).

9. Utilisation des produits de réaction obtenus selon l'une quelconque des revendications 1 à 8, comme liants pour des encres d'imprimerie, plus spécialement pour l'héliogravure au toluène.

## Claims

1. A process for the manufacture of reaction products of natural resinic acids and formaldehyde which are partially esterified and partially converted to salts which are obtained by reaction of natural resinic acids with formaldehyde and further reaction with compounds of dibasic metals to form salts characterized in that

a) the natural resinic acids are reacted in a first step with 7.5 to 12% by weight, referred to the weight of the natural resinic acid, of a polymeric formaldehyde at superatmospheric pressure and at a temperature of from 100 to 200°C,

b) in a second stage, the temperature is increased to at least 200°C, but by at least 20°C, and the reaction is continued at atmospheric pressure to yield a partially esterified product having an acid number of 115 to 135,

c) the reaction product obtained is converted at a temperature of at least 200°C with an amount of an alkaline reacting calcium compound sufficient to partially yield a calcium salt having a calcium content of from 3.5 to 4 parts by weight, referred to 100 parts by weight of the reaction product;

d) any residual calcium compound is neutralized by the addition of from 10 to 50% by weight, referred to the calcium compound added, of a saturated monocarboxylic acid having from 1 to 6 carbon atoms, at a temperature of at least 200°C, while simultaneously completing the salt formation by reaction to yield a reaction product having an acid number of from 20 to 40 and the products obtained are

$e_1$) isolated after step d) or

$e_2$) there are admixed after at least one of the stages b) to d) up to 5% by weight of natural resinic acids.

2. A proces as claimed in claim 1 characterized in that the reaction of stage a) is conducted at a temperature in the range from 125 to 200°C, preferably up to 180°C, and that of stages b) and c) is conducted at a temperature in the range from 200 to 280°C, preferably from 200 to 260°C.

3. A process as claimed in claim 1 or 2 characterized in that the natural resinic acids in step a) are reacted with 8 to 10% by weight of the polymeric formaldehyde.

4. A process as claimed in one or more of claims 1 to 3 characterized in that the temperature applied in stage c) is not lower than that applied in stage b).

5. A process as claimed in one or more of claims 1 to 4 characterized in that the calcium compound applied in stage c) is calcium oxide, calcium hydroxide or a mixture thereof, preferably as a suspension in organic solvents.

6. A process as claimed in one or more of claims 1 to 5 characterized in that the monocarboxylic acid reacted in stage d) is acetic acid.

7. A process as claimed in one or more of claims 1 to 6 characterized in that the carboxylic acid reacted in stage d) is added in admixture with a solvent, preferably the same solvent which is used for the suspension of the calcium compound.

8. A process as claimed in one or more of claims 1 to 7 characterized in that the final product has a melting point of at least 130°C (capillary method) and a viscosity in the range from 50 to 600, preferably from 70 to 400 mPa.s (in a 50% solution in toluene at 20°C).

9. Use of reaction products obtained according to one or more of claims 1 to 8 as a binder for printing inks, particularly for toluene gravure printing inks.